# EUROPÄISCHE PATENTANMELDUNG

(11) **EP 2 439 750 A1**
(43) Veröffentlichungstag der Anmeldung: **11.04.2012**
(21) Anmeldenummer: 10306094.3
(22) Anmeldetag: 07.10.2010
(51) Int. Cl.: H01B 9/00, H01B 7/42, G02B 6/44

(54) **Anordnung mit einem elektrischen Energiekabel**

(71) Anmelder: Nexans, 75008 Paris (FR)
(72) Erfinder: Schick, Sebastian, 30163, Hannover (DE); Radomski, Dirk, 30163, Hannover (DE)
(74) Vertreter: Döring, Roger

(57) **Zusammenfassung**

Es wird eine Anordnung mit einem elektrischen Energiekabel (3) und mindestens einem aus Kunststoff bestehenden Rohr (6) angegeben. Das Energiekabel (3) weist mindestens einen elektrischen Leiter (4) und einen äußeren Mantel (5) aus Isoliermaterial auf. Das Rohr (6) ist in Gebrauchslage mit dem Energiekabel (3) zu einer Einheit verbunden. Es ist dazu außerhalb des Mantels (5) des Energiekabels (3) an demselben befestigt.

## Beschreibung

Die Erfindung bezieht sich auf eine Anordnung mit einem elektrischen Energiekabel, das mindestens einen elektrischen Leiter und einen äußeren Mantel aus Isoliermaterial aufweist, und mit mindestens einem aus Kunststoff bestehenden Rohr, das in Gebrauchslage mit dem Energiekabel zu einer Einheit verbunden ist (EP 0 135 132A1).

Eine solche Anordnung wird mit Vorteil in modernen Energieverteilungsnetzen eingesetzt. "Energiekabel" kann dabei ein Hochspannungskabel, ein Mittelspannungskabel oder ein Niederspannungskabel sein. Es soll mindestens einen elektrischen Leiter aufweisen. Ein solches Energiekabel - im folgenden kurz "Kabel" genannt - ermöglicht nicht nur eine Energieübertragung, sondern beispielsweise zusätzlich auch die Übertragung nachrichtentechnischer Signale bzw. Daten über in dem Rohr angeordnete Lichtwellenleiter (LWL). Die nachrichtentechnischen Signale können dabei beispielsweise unabhängig von der Energieübertragung beispielsweise zu Teilnehmern eines Fernmeldenetzes übertragen werden. Mittels der LWL können auch die Daten von Stromverbrauchszöhlern zu einer Zentrale übertragen werden, welche bei an das jeweilige Energieverteilungsnetz angeschlossenen Verbrauchern installiert sind.

Das bei der eingangs beschriebenen bekannten Anordnung eingesetzte Kabel nach der EP 0 135 132 A1 ist ein Hochspannungskabel. Es hat drei isolierte elektrische Leiter und drei als Leerrohre ausgeführte Rohre, die in den außen liegenden Zwickeln zwischen den Leitern angeordnet sind. In die Leerrohre können bei Bedarf LWL eingezogen bzw. eingeblasen werden. Neben den Leerrohren sind in den Zwickeln Beiläufe angebracht, welche die Leerrohre nach außen abdecken. Der gesamte Aufbau des Kabels ist von einer Armierung und einem über derselben angebrachten Mantel aus Isoliermaterial umgeben. Die Leerrohre können mit sinnvollen lichten Abmessungen nur dann im Aufbau des Kabels untergebracht werden, wenn die Zwickel zwischen den Leitern desselben ausreichend groß sind.

Der Erfindung liegt die Aufgabe zugrunde, die eingangs geschilderte Anordnung so zu gestalten, daß sie auch für Kabel mit kleineren Abmessungen geeignet ist.

Diese Aufgabe wird gemäß der Erfindung dadurch gelöst, daß das Rohr außerhalb des Mantels des Kabels an demselben befestigt ist.

Für diese Anordnung kann grundsätzlich jedes übliche Kabel eingesetzt werden, das in üblicher Technik ohne Sonderfertigung hergestellt werden kann. Zur Herstellung der Einheit von Kabel und Rohr kann das Rohr bereits bei der Fertigung des Kabels aber auch in einem zusätzlichen Arbeitsgang an demselben befestigt werden. Die Einheit aus Kabel und Rohr kann ebenfalls in üblicher Technik zwischen zwei zu verbindenden elektrischen Einrichtungen verlegt werden. Das Rohr ist in Gebrauchslage direkt zugänglich, ohne daß dazu in das Kabel eingegriffen werden muß. Es kann in an sich bekannter Technik zur Aufnahme von LWL verwendet werden, die auch nachträglich in das Rohr eingezogen bzw. eingeblasen werden können. Es kann aber auch zum Durchleiten eines Kühlmediums zum Kühlen des Kabels eingesetzt werden.

Das Rohr kann mit Vorteil mit einer Vielzahl von Befestigungselementen mit dem Kabel verbunden werden, die mit axialem Abstand zueinander um Kabel und Rohr herumgelegt werden. In bevorzugter Ausführungsform werden als Befestigungselemente Klammern eingesetzt, die mit Schnappwirkung in radialer Richtung auf das Kabel einerseits und das Rohr andererseits aufgesteckt werden. Das Rohr kann achsparallel zum Kabel verlaufen. Es kann aber auch mit wendelförmigem Verlauf um das Kabel herum angeordnet sein.

In einer weiteren Ausführungsform der Anordnung kann das Rohr auch derart wendelförmig um das Kabel herum angebracht werden, daß es bei entsprechender Schlaglänge ohne den Einsatz von Befestigungselementen selbsthaltend am Kabel festgelegt ist.

In dieser Anordnung sind das Kabel einerseits und das Rohr andererseits getrennt voneinander zugänglich. Das gilt mit besonderem Vorteil für das Rohr, das in vorteilhafter Weise außerhalb von Verbindungsmuffen geführt werden kann, in denen das Kabel mit einem anderen Kabel elektrisch leitend verbunden wird. Dieser Vorteil des außen liegenden Rohres gilt beispielsweise für das Einbringen von LWL in dasselbe, wenn das Rohr als Leerrohr ausgeführt ist, und auch für Arbeiten an den LWL, wenn dieselben sich bereits in dem Rohr befinden.

Das außerhalb des Kabels angebrachte Rohr ist auch dann von Vorteil, wenn dasselbe zum Durchleiten eines Kühlmediums verwendet wird. Das Rohr hat direkten Kontakt mit dem Kabel bzw. dessen Mantel und kann daher die von dem Kabel erzeugte Wärme unmittelbar aufnehmen. Ein fleißfähiges Kühlmedium, wie beispielsweise Kohlenwasserstoffe oder nicht brennbare Stoffe, das zumindest beim Betrieb der Anordnung durch das Rohr fließt, kann die von dem Kabel erzeugte Wärme also schnellstens ableiten. Die Leistung des Kabels kann so auf einfache Weise bei dem vorgegebenen Wert gehalten oder bei unveränderten Abmessungen auch erhöht werden. Andererseits können bei ausreichender Kühlung die Abmessungen des Kabels bei gleichbleibender Leistung auch verkleinert werden. Das Rohr kann dann mit Vorteil auch zur Nutzung der an sich unerwünschten Wärme des Kabels zur Beheizung beliebiger Einrichtungen genutzt werden, wenn das erwärmte Kühlmedium beispielsweise einer Wärmepumpe zugeleitet wird. Die von dem Kabel erzeugte Wärme steht als Verlustwärme quasi kostenlos zur Verfügung und das Rohr ist mit dem Kabel ohnehin auf der Übertragungsstrecke verlegt, so daß keine Investitionen für ein separates Rohrsystem erforderlich sind.

Ausführungsbeispiele des Erfindungsgegenstandes sind in den Zeichnungen dargestellt.

Es zeigen:
Fig. 1 in rein schematischer Darstellung eine Anordnung nach der Erfindung.
Fig. 2 eine Seitenansicht der Anordnung nach der Erfindung.
Fig. 3 einen Schnitt durch Fig. 2 längs der Linie III - III.
Fig. 4 eine in der Anordnung verwendbare Klammer.
Fig. 5 eine gegenüber Fig. 2 abgewandelte Ausführungsform der Anordnung.

Das in der Anordnung eingesetzte Energiekabel kann - wie bereits eingangs erwähnt - ein Hochspannungskabel, ein Mittelspannungskabel oder ein Niederspannungskabel sein. Die Anordnung wird mit besonderem Vorteil bei Mittel-oder Niederspannungskabeln eingesetzt, die beispielsweise als Einleiterkabel oder als Kabel mit Sektorleitern ausgeführt sind. Diese Kabel weisen in der Regel keine zwischen Leitern vorhandenen Zwickel auf, zumindest aber keine zum Anbringen von Rohren ausreichend großen Zwickel. Stellvertretend für alle möglichen Ausführungsformen des Energiekabels wird im folgenden ein Mittel- bzw. Niederspannungskabel mit lediglich einem Leiter berücksichtigt. Es wird weiter nur als "Kabel" bezeichnet.

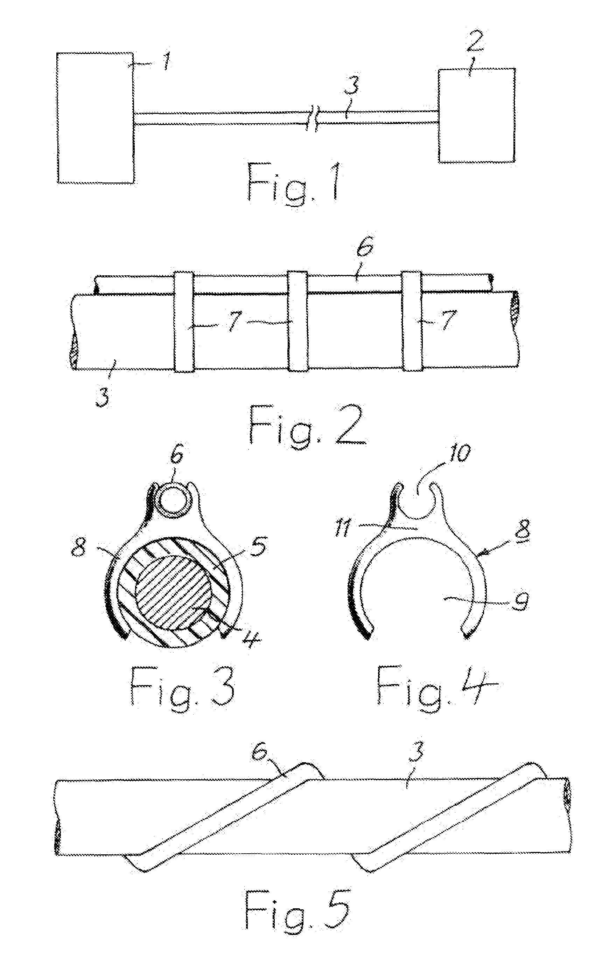

In Fig. 1 sind zwei elektrische Einrichtungen 1 und 2 schematisch angedeutet, die durch ein Kabel 3 miteinander verbunden sind, dessen Aufbau beispielsweise aus Fig. 3 hervorgeht. Es hat entsprechend der dargestellten Ausführungsform einen elektrischen Leiter 4 und einen denselben umgebenden Mantel 5 aus Isoliermaterial. Der Leiter 4 besteht vorzugsweise aus Aluminium oder Kupfer. Der Mantel 5 kann beispielsweise aus Polyvinylchlorid oder Polyethylen bestehen. In den elektrischen Einrichtungen 1 und 2 sind elektrische Geräte vorhanden. Die Einrichtung 1 kann beispielsweise eine Umspannstation eines Stromversorgungsnetzes sein. Die Einrichtung 2 kann beispielsweise ein Verteiler sein, an den eine Vielzahl von Haushalten angeschlossen ist. Das Kabel 3 kann in üblicher Technik zwischen den beiden Einheiten 1 und 2 angeordnet sein. Es kann also beispielsweise direkt im Erdboden verlegt oder auch in bestehende Kabelkanäle oder Rohre eingezogen sein.

An dem Kabel 3 ist gemäß Fig. 2 ein aus Kunststoff bestehendes Rohr 6 befestigt, und zwar mit Befestigungselementen 7, die mit axialen Abständen zueinander um Kabel 3 und Rohr 6 herumgelegt sind. Das Rohr 6 besteht mit Vorteil aus mechanisch stabilem Kunststoff, wie beispielsweise Polyethylen. Es ist in der Anordnung mit Vorteil als Leerrohr am Kabel 3 angebracht. In das Rohr 6 können dann entsprechend den obigen Ausführungen LWL eingezogen und manipuliert werden. Es kann aber auch ein Kühlmedium durch das Rohr 6 geleitet werden.

Als Befestigungselemente 7 können grundsätzlich alle geeigneten Bauteile verwendet werden, wie beispielsweise Kabelbinder. In bevorzugter Ausführungsform werden zum Verbinden von Kabel 3 und Rohr 6 Klammern 8 eingesetzt, wie sie aus den Fig. 3 und 4 hervorgehen. Die einteilig ausgeführten Klammern 8 bestehen aus einem mechanisch stabilen, elastischen Material, so daß sie auf das Kabel 3 und das Rohr 6 einrastend aufgeschnappt werden können. Sie umgeben im Montagezustand sowohl das Kabel 3 als auch das Rohr 6 mit einem Winkel von größer als 180 °, so daß Kabel 3 und Rohr 6 unverlierbar miteinander verbunden sind.

Die Klammern 8 sind auf die Abmessungen des Kabels 3 und des Rohres 6 abgestimmt. Sie haben entsprechend Fig. 4 die Form einer nach beiden Seiten offenen "8" mit einem im Durchmesser größeren ersten Teil 9 für das Kabel 3 und einem kleineren zweiten Teil 10 für das Rohr 6. Die Teile 9 und 10 sind durch eine Art Steg 11 miteinander verbunden. Zur Montage der Anordnung können die Klammern 8 zunächst in den erforderlichen Abständen mit ihren ersten Teilen 9 in radialer Richtung auf das Kabel 3 aufgesteckt werden. Das Rohr 6 kann danach besonders einfach in den vom Kabel 3 abstehenden, offenen zwischen Teil 10 der Klammern 8 mit Schnappwirkung eingedrückt werden.

Mit den aus Fig. 4 ersichtlichen Klammern 8 kann ein Rohr 6 am Kabel 3 angebracht werden. Dabei kann das Rohr 6 achsparallel zum Kabel 3 verlaufen. Es kann aber auch wendelförmig um das Kabel 3 herum angeordnet werden. Mit weiteren Klammern, die gegenüber den für das Rohr 6 vorgesehenen Klammern 8 in Umfangsrichtung des Kabels 3 versetzt sind, kann auch mindestens ein weiteres Rohr außen am Kabel 3 angebracht werden. Es ist auch möglich, die Klammern 8 mit mindestens einem weiteren, nach außen offenen Teil, das dem zweiten Teil 10 derselben entspricht, zur Aufnahme mindestens eines zweiten Rohres auszurüsten.

In einer von der Ausführungsform der Anordnung nach Fig. 2 abweichenden Ausführungsform derselben kann das Rohr 6 gemäß Fig. 5 auch mit einer solchen Schlaglänge wendelförmig um das Kabel 3 herumgewickelt sein, daß es auch ohne gesonderte Befestigungselemente mit demselben verbunden ist.

## Patentansprüche

1. Anordnung mit einem elektrischen Energiekabel, das mindestens einen elektrischen Leiter und einen äußeren Mantel aus Isoliermaterial aufweist, und mit mindestens einem aus Kunststoff bestehenden Rohr, das in Gebrauchslage mit dem Energiekabel zu einer Einheit verbunden ist, **dadurch gekennzeichnet, daß** das Rohr (6) außerhalb des Mantels des Energiekabels (3) an demselben befestigt ist.

2. Anordnung nach Anspruch 1, **dadurch gekennzeichnet, daß** das Rohr (6) mittels einer Vielzahl von Befestigungselementen (7) an dem Energiekabel (3) befestigt ist, die in Gebrauchslage mit axialem Abstand zueinander auf der ganzen Länge des Energiekabels (3) einerseits und des Rohres (6) andererseits angebracht sind.

3. Anordnung nach Anspruch 2, **dadurch gekennzeichnet, daß** die Befestigungselemente (7) als Klammern (8) ausgeführt sind, die in radialer Richtung einerseits auf das Energiekabel (3) und andererseits auf das Rohr (6), beide Teile mit Schnappwirkung teilweise umgreifend, aufgesteckt sind.

4. Anordnung nach Anspruch 1, **dadurch gekennzeichnet, daß** das Rohr (6) wendelförmig um das Energiekabel (3) herumgewickelt ist.

## Geänderte Patentansprüche

### Geänderte Patentansprüche gemäss Regel 137(2) EPÜ.

**1.** Anordnung mit einem elektrischen Energiekabel (3), das mindestens einen elektrischen Leiter und einen äußeren Mantel aus Isoliermaterial aufweist, und mit mindestens einem aus Kunststoff bestehenden Rohr (6), das in Gebrauchslage mit dem Energiekabel (3) zu einer Einheit verbunden ist, **dadurch gekennzeichnet, daß** das Rohr (6) mittels einer Vielzahl von aus einem mechanisch stabilen, elastischen Material bestehenden Klammern (8) außerhalb des Mantels des Energiekabels (3) an demselben befestigt ist, die in Gebrauchslage mit axialem Abstand zueinander auf der ganzen Länge des Energiekabels (3) einerseits und des Rohres (6) andererseits angebracht sind, die in Form einer nach beiden Seiten offenen "8" ausgeführt sind und die in radialer Richtung einerseits auf das Energiekabel (3) und andererseits auf das Rohr (6) aufgesteckt sind, beide Teile jeweils mit Schnappwirkung mit einem Winkel von größer als 180° umgreifend.
